# EUROPEAN PATENT SPECIFICATION

(11) **EP 0 465 077 B1**
(45) Date of publication and mention of the grant of the patent: **13.12.1995**
(21) Application number: 91305695.8
(22) Date of filing: 24.06.1991
(51) Int. Cl.: H01R 13/74

(54) **An outlet box for a cable duct arrangement**
Verbindungskiste für eine Kabelkanaleinrichtung
Boîte de connexion pour une canalisation électrique

(30) Priority: 25.06.1990 FI 903191
(43) Date of publication of application: 08.01.1992
(73) Proprietor: NOKIA ALUMIINI OY, 00210 Helsinki (FI)
(72) Inventor: Niskanen, Aimo, SF-02320 Espoo (FI)
(74) Representative: Howden, Christopher Andrew

(56) References cited:
- WO-A-83/04143
- GB-A- 1 185 620
- US-A- 4 090 594

## Description

This invention relates to an outlet box for a cable duct comprising a case-like channel track forming at least one cable space for cables and conductors and having a front plate provided with an installation slot covered with a cover, the edges of the installation slot forming fastening edges for outlet boxes, whereby the outlet box comprises at least one gripping tongue snapping under the fastening edge of the channel track.

It is known from the prior art to use a cable duct arrangement in apartments, offices, staircases and the like, the required cables and conductors for electricity, telephone, antenna, etc., being encased in a cable duct extending along a desired wall/desired walls. Only socket outlets and other outlets and connections mounted in the front plate of the cable duct for use at various points are outwardly visible. All conductors, outlet boxes and installation equipment are invisible within the case-like channel track. The outlet boxes are thereby attached to the fastening edges of the front plate of the channel track in such a way that the cover plates of the outlet boxes are positioned substantially flush with the cover of the installation slot. The outlet boxes may be installed side by side in contact with or spaced apart from each other. Openings possibly remaining between the boxes are covered with cover plates of suitable size.

Today there is a tendency to avoid the use of screws and other such separate fastening means for fastening the outlet boxes to the fastening edges of the channel track and to use so-called snap fastening means. For this purpose the frame of the outlet box is provided at the manufacturing step with one or more gripping tongues or other similar flexible retainer for each fastening edge. When the frame is pressed in position into the installation slot, the retainer snaps under the corresponding fastening edge and prevents the box from falling away from the correct position.

A disadvantage of this kind of snap fastening is, however, that it does not prevent the outlet box from moving in the longitudinal direction of the fastening edge. As a result of this, there exists a danger that the outlet boxes are pushed away from the correct position during the installation or slide by themselves downwards in a vertical portion of the cable duct. This makes the installation work and the position of the cover plates slower and more difficult.

An object of the present invention is to provide an outlet box for a cable duct of the above noted kind which avoids the above-mentioned disadvantage of known outlet boxes and enables the outlet box to be locked unslideably in position in the channel track of the cable duct without any special fastening measures.

According to the invention, there is provided outlet box for a cable duct comprising a case-like channel track forming at least one cable space for cables and conductors and having a front plate provided with an installation slot covered with a cover, the edges of the installation slot being provided by fastening flanges for outlet boxes, the outlet box comprising a frame encompassing an interior of the box, the frame having attachment means for attachment of an installation ring of a coupling assembly, the frame being provided with a supporting flange for engagement with a front surface of a said fastening flange, the frame including at least one gripping tongue which normally projects from said frame and which is resiliently displaceable inwardly, relative to the remainder of the frame, towards the interior of the box, to snap under a said fastening flange of such a channel track, when the frame is inserted in such a channel track through said installation slot, to spring outwardly again behind said fastening flange, characterised in that said tongue is also resiliently displaceable towards and away from said supporting flange and a clamping screw is provided extending through said supporting flange and into said gripping tongue for drawing the gripping tongue towards the supporting flange for clamping such fastening flange between the supporting flange and the gripping tongue.

The invention is based on the idea that the gripping tongues are also utilised as means for locking the outlet box to the channel track in such a way that the outlet box is releasably prevented from sliding along the fastening edges of the channel track. In a preferred embodiment, the frame as two such gripping tongues on opposite sides of the frame, each said gripping tongue having a respective said clamping screw extending through said supporting flange and into the respective gripping tongue for drawing the gripping tongue towards the supporting flange for clamping such fastening flange between the supporting flange and the gripping tongue. Because the locking of the gripping tongues takes place automatically when fastening the installation ring and cover plate to the frame of the outlet box, the locking does not require any separate additional measures.

In the following the invention will be described in greater detail with reference to the attached drawing, in which
Figure 1 is a perspective view of a cable duct arrangement in which outlet boxes according to the invention are used;
Figure 2 is an enlarged view of the cable duct and one embodiment of an outlet box according to the invention when disassembled; and
Figures 3 and 4 are a side view and an axial sectional view of the outlet box, respectively.

A cable duct 1 shown in the drawing comprises a metallic, case-like channel track 2 having a substantially rectangular cross-section; and a number of outlet boxes 3. The channel track comprises a cable space 4 and an installation slot 6 in a front plate 5, the installation slot being covered with an openable cover 7. Both longitudinal edges of the installation slot are formed as fastening edges 8 for the outlet boxes.

The outlet box 3 comprises a frame 9 to be attached to the channel track and a coupling assembly 10 provided with a supporting installation ring 11. A cover plate 12 is attached to the frame. The frame is provided on its opposite sides with flexible gripping tongues 13 which snap under the fastening edges when the frame is pressed in place in the installation slot and prevent the frame from moving out of the installation slot.

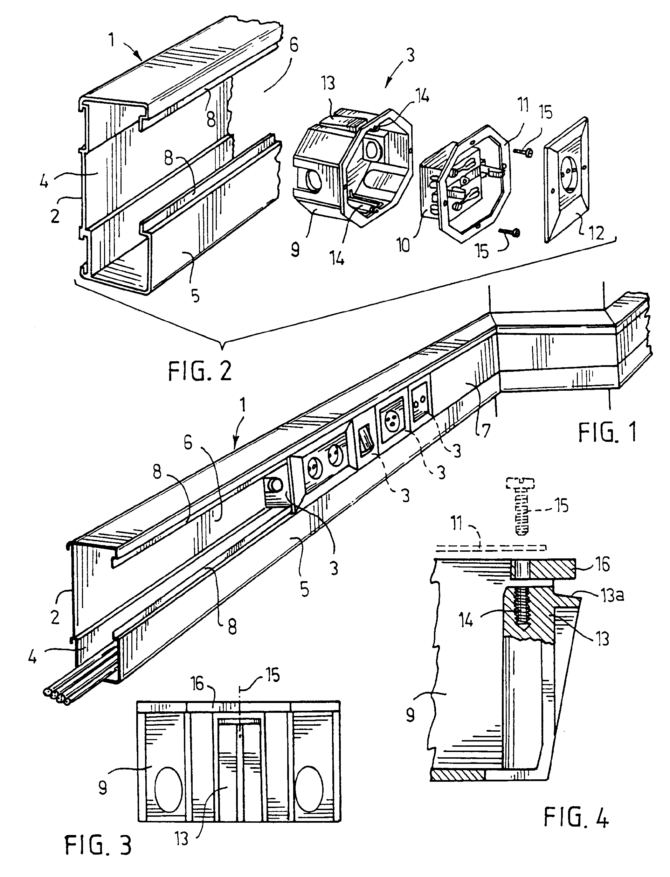

In the embodiment shown in Figures 3 and 4, the gripping tongues are formed in the frame in such a way that they are both radially and axially flexible with respect to the frame. For this purpose, the gripping tongues are notched up to the bottom of the frame. The gripping tongue is provided with a threaded boring 14 for a screw 15 required for fastening the installation ring to the frame.

In order to install the outlet box in the channel track, the frame 9 is first pressed in position in the installation slot of the channel track in such a way that supporting edges 16 positioned on opposite sides of the frame are pressed against the fastening edges 8 of the channel track, and the gripping tongues 13 snap under the supporting edges. After the connection of the conductors is completed, the coupling assembly 10 including an installation ring 11 is inserted into the frame and its fastening screws 15 are screwed in. When the screws are tightened, they draw the gripping tongues flexibly towards the installation ring, so that the fastening edges 8 of the channel track are clamped between the supporting edges and the gripping tongues of the frame.

The drawing and the description related to it are only intended to illustrate the idea of the invention. In its details, the outlet box of the invention may vary within the scope of the claims. Even though the frame of an outlet box is normally provided with two gripping tongues positioned on opposite sides of the frame, one of the gripping tongues may be replaced with fixed fingers which are passed under one fastening edge of the channel track before the other gripping tongue snaps under the other fastening edge.

The features disclosed in the foregoing description, in the following claims and/or in the accompanying drawings may, both separately and in any combination thereof, be material for realising the invention in diverse forms thereof.

## Claims

1. Outlet box for a cable duct (1) comprising a case-like channel track (2) forming at least one cable space (4) for cables and conductors and having a front plate (5) provided with an installation slot (6) covered with a cover (7), the edges of the installation slot being provided by fastening flanges (8) for outlet boxes (3), the outlet box comprising a frame (9) encompassing an interior of the box, the frame having attachment means for attachment of an installation ring of a coupling assembly, the frame (9) being provided with a supporting flange (16) for engagement with a front surface of a said fastening flange (8), the frame (9) including at least one gripping tongue (13) which normally projects from said frame and which is resiliently displaceable inwardly, relative to the remainder of the frame, towards the interior of the box, to snap under a said fastening flange (8) of such a channel track, when the frame is inserted in such a channel track through said installation slot, to spring outwardly again behind said fastening flange, characterised in that said tongue (13) is also resiliently displaceable towards and away from said supporting flange (16) and a clamping screw (15) is provided extending through said supporting flange (16) and into said gripping tongue (13) for drawing the gripping tongue towards the supporting flange (16) for clamping such fastening flange between the supporting flange and the gripping tongue (13).

2. An outlet box according to claim 1 wherein the frame has two such gripping tongues (13) on opposite sides of the frame, each said gripping tongue having a respective said clamping screw (15) extending through said supporting flange and into the respective gripping tongue (13) for drawing the gripping tongue towards the supporting flange (16) for clamping such fastening flange between the supporting flange and the gripping tongue (13).

3. An outlet box according to claim 1 or claim 2 in combination with a coupling assembly including a portion adapted to be received within the box and further including an installation ring, said screw or screws also passing through said installation ring and serving to attach the installation ring to the frame (9).

4. An outlet box according to claim 2 or claim 3 in which the surfaces of the gripping tongues which engage said fastening flanges (8) when the outlet box is fully installed in the cable duct are obliquely inclined relative to the opposing surface of said supporting flange.

## Patentansprüche

1. Anschlußdose für einen Kabelkanal (1), der eine gehäuseartige Kanalbahn (2) aufweist, die wenigstens einen Kabelraum (4) für Kabel und Leiter bildet und eine Frontplatte (5) hat, die mit einem von einer Abdeckung (7) abgedeckten Einbauschlitz (6) versehen ist, wobei die Ränder des Einbauschlitzes durch Befestigungsflansche (8) für Anschlußdosen (3) gebildet sind, wobei die Anschlußdose einen Rahmen (9) aufweist, der ein Inneres der Dose umschließt und eine Befestigungseinrichtung zum Befestigen eines Einbaurings einer Kupplungsanordnung hat, wobei der Rahmen (9) mit einem Stützflansch (16) zum Eingriff mit einer vorderen Oberfläche des Befestigungsflanschs (8) versehen ist und der Rahmen (9) wenigstens eine Klemmlasche (13) aufweist, die normalerweise von dem Rahmen vorsteht und federnd nach innen relativ zu dem Rest des Rahmens zum Inneren der Dose verlagerbar ist, um unter einem Befestigungsflansch (8) einer solchen Kanalbahn einzurasten, wenn der Rahmen durch den Einbauschlitz in eine solche Kanalbahn eingesetzt wird, um erneut nach außen hinter den Befestigungsflansch zu federn, dadurch gekennzeichnet, daß die Lasche (13) außerdem zu und von dem Abstützflansch (16) elastisch verlagerbar ist und daß eine Anzugsschraube (15) vorgesehen ist, die durch den Abstützflansch (16) und in die Klemmlasche (13) hinein verläuft, um die Klemmlasche zu dem Abstützflansch (16) hin zu ziehen, um den Befestigungsflansch zwischen dem Abstützflansch und der Klemmlasche (13) festzulegen.

2. Anschlußdose nach Anspruch 1, wobei der Rahmen zwei solche Klemmlaschen (13) an entgegengesetzten Seiten des Rahmens hat und jede Klemmlasche eine entsprechende Anzugsschraube (15) hat, die den Abstützflansch durchsetzt und in die entsprechende Klemmlasche (13) verläuft, um die Klemmlasche in Richtung zu dem Abstützflansch (16) zu ziehen, um den Befestigungsflansch zwischen dem Abstützflansch und der Klemmlasche (13) festzulegen.

3. Anschlußdose nach Anspruch 1 oder 2 in Kombination mit einer Kupplungsanordnung, die einen Bereich aufweist, der zur Aufnahme in der Dose ausgebildet ist, und ferner einen Einbauring aufweist, wobei die Schraube oder Schrauben auch den Einbauring durchsetzen und dazu dienen, den Einbauring an dem Rahmen (9) zu befestigen.

4. Anschlußdose nach Anspruch 2 oder 3, wobei die Oberflächen der Klemmlaschen, die mit den Befestigungsflanschen (8) in Eingriff sind, wenn die Anschlußdose vollständig in den Kabelkanal eingebaut ist, relativ zu der gegenüberliegenden Oberfläche des Abstützflanschs geneigt sind.

## Revendications

1. Boîte de connexion en sortie pour un chemin de câble (1) comportant une piste en canal (2) de type coffret formant au moins un espace (4) pour des câbles et des conducteurs et présentant une face avant (5) munie d'une rainure d'installation (6) recouverte d'un couvercle (7), les bords de la rainure d'installation étant munis de rabats de fixation (8) pour boîtes de connexion en sortie (3), la boîte de connexion en sortie comportant un cadre (9) entourant un intérieur de la boîte, le cadre présentant des moyens de fixation pour fixer une couronne d'installation d'un ensemble à coupler, le cadre (9) étant muni d'un rebord support (16) pour venir en prise avec une surface avant dudit rabat de fixation (8), le cadre (9) incluant au moins une languette de prise (13) qui vient normalement en saillie depuis ledit cadre et qui peut se déplacer élastiquement vers l'intérieur, par rapport au reste du cadre, en direction de l'intérieur de la boîte, pour s'encliqueter, par déformation élastique, sous un dit rabat de fixation (8) d'une telle piste en canal, lorsque l'on insère le cadre dans une telle piste en canal en passant par ladite rainure d'installation, pour saillir élastiquement vers l'extérieur à nouveau, derrière ledit rabat de fixation, caractérisée par le fait que ladite languette (13) peut également se déplacer élastiquement en direction dudit rebord support (16) et en direction opposée et qu'il est prévu une vis de bridage (15) qui passe à travers ledit rebord support (16) et dans ladite languette de prise (13) pour tirer la languette de prise en direction du rebord support (16) pour brider ce rabat de fixation entre le rebord support et la languette de prise (13).

2. Boîte de connexion en sortie selon la revendication 1, dans laquelle le cadre comporte deux de ces languettes de prise (13), sur les côtés opposés du cadre, chaque dite languette de prise présentant une dite vis de bridage (15) respective passant à travers ledit rebord support et dans la languette de prise (13) respective pour tirer la languette de prise en direction du rebord support (16) pour brider ledit rabat de fixation entre le rebord support et la languette de prise (13).

3. Boîte de connexion en sortie selon la revendication 1 ou la revendication 2, en combinaison avec un ensemble à coupler incluant une portion conçue pour être reçue à l'intérieur de la boîte et incluant en outre une couronne d'installation, ladite vis, ou lesdites vis, passant également à travers ladite couronne d'installation et servant à fixer la couronne d'installation au cadre (9).

4. Boîte de connexion en sortie selon la revendication 2 ou la revendication 3, dans laquelle les surfaces des languettes de prise qui viennent en prise avec lesdits rabats de fixation (8) lorsque la boîte de connexion en sortie est entièrement installée dans le chemin de câble sont inclinées obliquement par rapport à la surface dudit rebord support qui se trouve en face.
